# EUROPEAN PATENT APPLICATION

(11) **EP 4 790 198 A1**
(43) Date of publication of application: **12.08.2026**
(21) Application number: 25156700.4
(22) Date of filing: 07.02.2025
(51) Int. Cl.: E04B 1/32

(54) **STRUCTURAL PLATES FOR DOME CONSTRUCTION AND METHOD OF FORMING CURVED PLATES**

(71) Applicant: Manioudaki, Anna, 17562 Athens (GR)
(72) Inventor: Manioudaki, Anna, 17562 Athens (GR)
(74) Representative: Kouzelis, Dimitrios

(57) **Abstract**

A curved structural plate (10) of parallelepiped form for forming and constructing a dome, comprising a top face (10a), a bottom face (10b), wherein the top face (10a) comprises grooves (2) extending from the first longitudinal edge towards the second longitudinal edge of the plate or vice versa. The depth of the grooves (2) is smaller than the thickness of the plate (10), and the grooves (2) are filled with insulating material. The plate also comprises a protective outer coating comprising a layer of cement plaster (4, 4'), a layer of UV protection coating (3, 3'), and a layer of an alkaline resistant mesh (5,5').

## Description

### Technical Field

The present disclosure relates to structural plates used in the construction of domes or other architectural structures that require curved, load-bearing surfaces. More specifically, the disclosure provides a curved structural plate featuring grooves filled with insulating material and methods for forming multilayered curved plates. These plates are lightweight, durable, and resistant to environmental conditions, making them particularly suitable for the construction of domes where multiple plates are joined using insulation material to form a unified structure.

### Background

Traditional dome construction often involves the use of pressurized raw materials, such as polystyrene spheres, which are placed in curved molds and subjected to superheated steam. This process requires specialized industrial equipment, including pressurized chambers and high-temperature systems, which are expensive and complex, demanding significant energy inputs. Consequently, such methods are often impractical for small-scale operations or regions where specialized machinery is unavailable.

The present disclosure addresses these issues by providing a curved structural plate that is formed through a simple and cost-effective process, without the need for expensive, specialized machinery. The curved structural plate comprises a plurality of grooves that are filled with insulating material while the depth of the grooves is smaller than the thickness of the plate. The completed plates are then assembled into a dome structure using insulation materials, to form a unified dome structure. This method and the structural plate per se, eliminates the need for pressurized chambers and superheated steam, offering a cost-effective and accessible solution for dome construction.

### Summary

According to a first aspect of the disclosure, a curved structural plate is provided comprising a top surface, a bottom surface opposite the top surface, and a pair of side surfaces defining a thickness of the plate, wherein the top surface comprises a first longitudinal edge and a second longitudinal edge, wherein the top surface comprises a plurality of grooves extending from the first longitudinal edge towards the second longitudinal edge or vice versa, wherein the depth of the plurality of grooves is smaller than the thickness of the plate, wherein the plurality of grooves are filled with insulating material.

In embodiments, the curved structural plate comprises a protective outer coating that comprises a layer of cement plaster, a layer of UV protection coating and a layer of an alkaline resistant mesh.

In embodiments, the insulation material is polyurethane foam.

In embodiments, the plurality of grooves are spaced between each other at a distance between 3-6 cm.

In embodiments, the depth of the plurality of grooves is between 4,5 and 8,5 cm.

In embodiments, the depth of the plurality of grooves is of about 80-95% of the thickness of the curved structural plate.

In embodiments, the depth of at least one groove from the plurality of the grooves is different.

In embodiments, the depth of all the plurality of grooves is equal.

In embodiments, the grooves are of rectilinear shape.

In a second aspect of the disclosure, a dome comprising a plurality of curved structural plates according to the first aspect is provided.

According to a third aspect of the disclosure a method of forming a curved structural plate is provided, the curved structural plate comprising a top surface, a bottom surface opposite the top surface, and a pair of side surfaces defining the thickness of the plate. The top surface comprises a first longitudinal edge and a second longitudinal edge. The disclosed method comprises engraving the top surface across with a plurality of grooves extending from the first longitudinal edge towards the second longitudinal edge or vice versa, the plurality of grooves having a depth that is smaller than the thickness of the plate, attaching an alkaline resistant mesh to a non-engraved surface of the plate, mounting the plate onto a mold having a curved surface, adding at least one weight to the top surface or to the one of the side surfaces of the structural plate, keeping the plate under the weight so as the plate adopts the curved plate of the mold and filling the grooves with insulation material for hardening the plate and for retaining the curvature of the plate.

In embodiments, the plurality of grooves is of rectilinear shape.

In embodiments, the depth of the plurality of the grooves is about 80-95 % of the thickness of the curved structural plate.

In embodiments, the insulation material is polyurethane foam.

In embodiments, the insulation material is applied in a liquid state and is configured to expand to fill the plurality of the grooves.

### Brief description of the drawings

Figure 1 shows a detail of a view of a curved structural plate comprising a plurality of grooves.
Figure 2 shows a detail of a view of a curved structural plate according to an embodiment of the current disclosure.

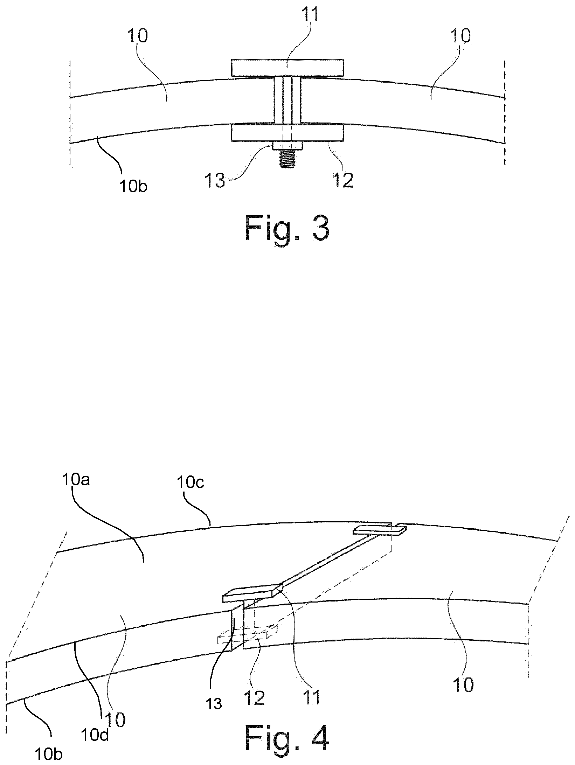

Figures 3-4 shows a detail of a dome having a plurality of curved structural plates according to the current disclosure.

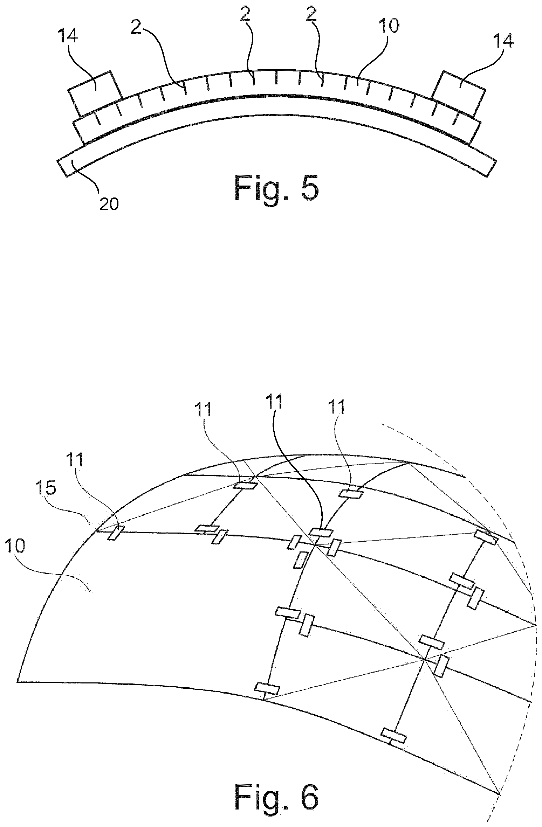

Figure 5 shows a method step for constructing a curved plate according to the current disclosure.
Figure 6 shows a part of a dome having a plurality of curved structural plates according to the current disclosure.

### Detailed Description

The disclosure provides a curved structural plate 10, which is particularly suited for the construction of domes. Plate 10 is made of expanded polystyrene foam (or EPS) 1 which is a strong material for constructions, especially suitable for load bearing situations, while it is not subject to degradation over time. Initially, prior to the molding process, plate 10 is substantially flat and may be of rectangular or square shape. The plate comprises a top surface 10a having a first and a second longitudinal edge (10c, 10d), a bottom surface 10b that is opposite the top, and a pair of side surfaces 13 that define the thickness of the plate 10. In examples, the thickness of the plate 10 is uniform across the entire surface, while in others, the thickness may vary depending on specific construction requirements. In examples, the thickness of the plate 10 may be about 5 cm to 10 cm.

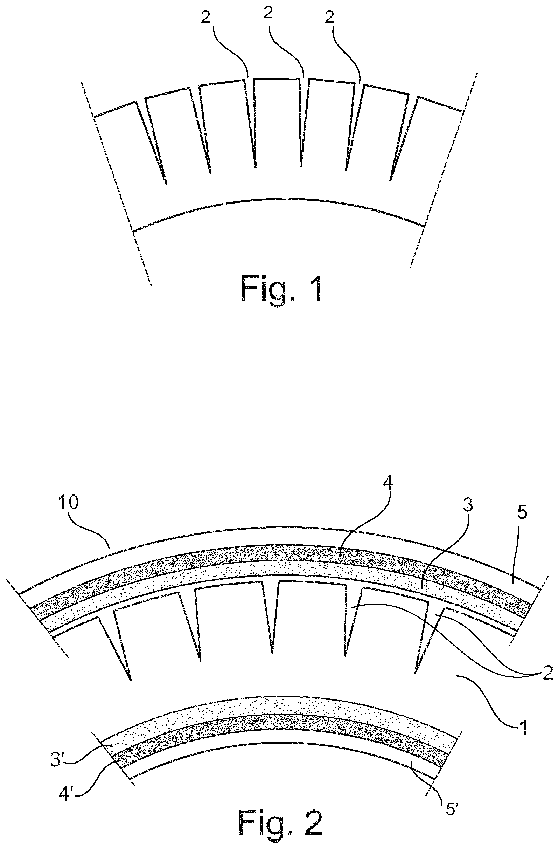

As shown in figures 1 and 2. The top surface 10a of plate 10 is engraved with a plurality of grooves 2 having a smaller depth than the thickness of plate 10. This ensures the plate 10 maintains sufficient strength while allowing controlled bending. This condition also ensures plate 10 maintains structural integrity and can withstand the forces acting on it without compromising its bending flexibility. In examples, the depth of the grooves 2 may be smaller than the thickness of the plate 10 of about 0,5 cm to 1,2 cm, more specifically 0,8 cm. In examples, the depth of the plurality of grooves 2 is of about 80-95% of the thickness of the curved structural plate 10. Such ratio between the depth of the grooves 2 and the thickness of the plate 10 ensures proper balance between structural integrity and insulating performance. The grooves 2 are machined onto the surface of the plate 10 with the usage of respective suitable cutting tools that ensure proper cut of the plate 10.

In examples, the plurality of grooves 2 are spaced between each other at a distance (D) between 3-6 cm, more specifically approximately 5 cm. This spacing ensures that the plate 10 can bend uniformly and efficiently, contributing to the desired curvature when the plate 10 is shaped. Other spacings may be contemplated, depending on the construction requirements. In examples, the depth of a groove may be different from the depth of the rest of the plurality of grooves 2, to achieve localized flexibility and structural reinforcement. In other examples, the depth of all grooves 2 is the same. In examples, the depth of the plurality of grooves is about 4,5 cm to 8,5 cm, in particular 6,5 cm. Such depth is beneficiary since it allows the controlled bending of the plate without compromising its mechanical strength. In examples, the plurality of grooves 2 are of rectilinear shape which simplifies fabrication and ensures uniform alignment of the insulating material.

In embodiments, the curved plate 10 has a multilayered structure, including an outer coating that comprises a cement plaster layer or cementitious thermal facade (4,4'), a layer of UV protection coating (3,3') which may be liquid anti-UVA, and an alkaline resistant mesh (5, 5').

The curved structural plate 10 is multilayered, thus ensuring both strength and durability. The protective coating on the outer surface of the plate 10 comprises a cement plaster layer (4,4') that provides structural reinforcement to withstand the weight of the dome and external environmental conditions, a UV protection coating (3,3') that prevents the degradation of the plate 10 from prolonged UV exposure, and the alkaline resistant mesh (5, 5') that enhances the bonding of the polyurethane foam to the plate 10, ensuring long-term structural integrity. In examples and as shown in figure 2, the multilayered configuration of the curved plate 10 has the following arrangement: the protective outer coating is followed by the cement plaster, then the UV coating which is followed by the alkaline resistant mesh. In examples, the layer of cement plaster may be of about 2-3cm, in particular 2,5cm, the layer of the UV protection coating may of about 0,2mm to 0,5mm, in particular 0,3mm and the layer of the alkaline resistant mesh may be of about 0,02mm to 0,05mm, in particular 0,03mm.

To transform and thereby produce the curved structural plate 10, the herein disclosed method comprises engraving the top surface 10a with a plurality of grooves 2 extending from the first longitudinal edge towards the second longitudinal edge or vice versa, attaching an alkaline resistant mesh (5, 5') with insulation material such as polyurethane foam, and molding the plate 10 into a curved shape. The plurality of grooves 2 have a depth that is smaller than the thickness of the plate 10, in particular slightly smaller than the thickness of the plate 10, of about 80-95% of the thickness of the curved structural plate 10.

An alkaline resistant mesh is attached, for example using adhesives, and bonded with polyurethane foam. The alkaline resistant mesh (5, 5') is attached to a non-engraved surface of the plate 10, to ensure the structural integrity of the plate 10 during the bending of the plate 10 when mounted on the curved mold 20. Typical alkaline resistant mesh is made by woven fiber glass to help resist attack from alkalinity. The alkaline-resistant mesh (5, 5') reinforces the bond between the plate 10 and insulation material, preventing the breakdown of the plate 10 due to the alkalinity of the foam and enhancing the overall strength of the structure.

The plate 10 is thus mounted onto a mold 20 with a curved surface. At least one weight 14 is strategically applied to ensure the entire surface of the plate 10 is in contact with the mold 20, promoting uniform curvature. For example, a first weight 14 may be placed at each corner of the top surface 10a of plate 10 and a second weight in the middle section. Any suitable material, such as but not limited to, metal or rock, may be used as a weight.

The mold 20 used to shape the plates has a curved surface that imparts the desired curvature to each plate 10, ensuring uniformity in the final structure. Once the plates are mounted and molded, the at least one weight 14 ensures uniform curvature by applying pressure to different sections of the plate 10 during the curing process. Plate 10 is kept under the weight 14 for a sufficient period of time, as long as needed for the plate 10 to adopt the curved shape of the mold 20.

After engraving, an insulation material is applied to fill the plurality of grooves 2. The insulation material is applied in a liquid state and is configured to expand to fill the grooves. The material expands and hardens, locking plate 10 into its curved configuration.

Polyurethane foam is a preferred material due to its resistance to extreme weather conditions, ease of application and uniformity of distribution.

Once each plate 10 is completed and cured, a plurality of these plates is welded together using polyurethane foam at the edges to form a cohesive, curved dome structure 15. The foam bonds the plates securely and fills the gaps between adjacent plates, creating a unified, curved surface. This ensures the dome structure 15 remains stable and maintains its shape over time. Once the plates are joined, any excess insulation material or remnants of the alkaline-resistant mesh are carefully removed to achieve a clean and uniform finish. This approach eliminates the need for heavy machinery while still achieving the necessary structural integrity and weather resistance required for dome construction.

The disclosed method is thus advantageous since it eliminates the need for heavy machinery such as pressurized chambers and superheated steam systems. It is cost-effective and accessible, especially for small-scale construction projects. It provides enhanced structural integrity due to the multilayered plate design. It also provides improved weather resistance with the usage of polyurethane foam and UV protection layers.

In other aspects of the disclosure, after the curved structural plates 10 are individually constructed and cured, they are assembled to form a dome structure 15 as follows:
On a stable surface, such as a wooden floor or concrete slab, the center of the dome is defined as the reference point for measurements. The outer diameter of the dome is measured and traced on the surface to establish the circular base where the plates will be positioned.

The numbered curved structural plates are gradually moved to the construction site. Each plate is placed upright, ensuring its base aligns with the traced circle on the floor.

A first plate 10 is fastened using diagonal beams for stability. A second plate 10 is placed firmly on the base next to the first, ensuring proper alignment. This process is repeated for the third and fourth plates. A ladder is placed at the center of the circle to allow access to the top of dome 15. The tops of the installed plates are temporarily joined using metal connectors 11 for structural support.

The remaining curved structural plates 10 are installed in sequence, except for one panel, which is left uninstalled to allow continued access to the dome's interior during the assembly process. Once the plates are satisfactorily aligned and closely fitted along the entire dome height, the panels are stabilized using metal connectors 11 in at least three points along the height. The seams between the plates are sealed using polyurethane foam, which expands to fill any gaps, ensuring structural integrity. Polyurethane foam is chosen not only for its insulation properties but also for its resistance to moisture, temperature fluctuations, and long-term environmental degradation, ensuring the dome's longevity.

After the polyurethane has hardened, the final plate 10 is installed to close the dome structure 15. A curved door frame is then placed at the designated door panel. The panel is marked and cut to create the door opening. Openings for windows are made in the positions indicated in the construction drawings. The process mirrors the door installation, ensuring proper cutting and alignment according to the specified dimensions.

Once the polyurethane foam has fully dried, the seams are cleaned of any remaining foam residue. A strip of non-alkaline thermal insulation material of sufficient width is applied vertically along the seams, followed by an adhesive material for additional sealing. The same cleaning and insulation process is repeated for all seams inside the dome to ensure both interior and exterior structural integrity. To comply with safety regulations, the dome is anchored to the base using stainless steel wire and anchors arranged crosswise for stability and resistance against external forces.

Although only a number of particular embodiments and examples have been disclosed herein, it will be understood by those skilled in the art that other alternatives, obvious modifications and/or equivalents thereof are possible. Furthermore, the present disclosure aims to cover all possible combinations of the particular embodiments described. Reference signs related to drawings and placed in parentheses in a claim, are solely for attempting to increase the intelligibility of the claim and shall not be construed as limiting the scope of the claim. The scope of the present disclosure should not be limited by particular embodiments but should be determined only by a fair reading of the claims that follow.

## Claims

1. A curved structural plate (10) of parallelepiped form comprising:
a top face (10a), a bottom face (10b) opposite the top face (10a), and two pairs of side faces (13) defining the thickness of the plate, wherein the top face comprises a first edge (10c) and a second longitudinal edge (10d), wherein the top face (10a) comprises a plurality of grooves (2) extending from the first longitudinal edge towards the second longitudinal edge or vice versa, wherein the depth of the plurality of grooves (2) is smaller than the thickness of the plate (10), wherein the plurality of grooves (2) are filled with insulating material.

2. The curved structural plate (10) according to claim 1, comprising a layer of outer coating comprising a layer of cement plaster (4, 4'), a layer of UV protection coating (3, 3'), and a layer of an alkaline resistant mesh (5,5').

3. The curved structural plate (10) according to claims 1 to 2, wherein the insulation material is polyurethane foam.

4. The curved structural plate (10) according to claims 1 to 3 wherein the plurality of grooves (2) are spaced between each other at a distance between 3-6 cm.

5. The curved structural plate (10) according to any of the preceding claims wherein the depth of the plurality of grooves (2) is between 4,5 cm - 8,5 cm.

6. The curved structural plate (10) according to any of the preceding claims wherein the depth of the plurality of grooves (2) is about 80-95% of the thickness of the curved structural plate (10).

7. The curved structural plate (10) according to any of claims 5 to 6 wherein the depth of at least one groove from the plurality of the grooves (2) is different.

8. The curved structural plate (10) according to any of claims 1-7 wherein the plurality of grooves (2) are of rectilinear shape.

9. The curved structural plate (10) according to any of claims 1-8 wherein the plurality of the grooves extend from the third longitudinal edge of the top face towards the fourth longitudinal of the top face and vice-versa.

10. A dome (15) comprising a plurality of curved structural plates (10) according to claims 1 to 9.

11. A method of forming a curved structural plate (10), the curved structural plate (10) comprising a top surface (10a), a bottom surface (10b) opposite the top surface, and a pair of side surfaces (13) defining a thickness of the plate, the top surface comprising a first longitudinal edge (10c) and a second longitudinal edge (10d), the method comprising the steps of:
i) engraving the top surface (10a) with a plurality of grooves (2) extending from the first longitudinal edge (10c) towards the second longitudinal edge (10d) or vice versa, the plurality of grooves (2) having a depth that is smaller than the thickness of the plate,
ii) attaching an alkaline resistant mesh (5,5') to a non-engraved surface of the plate (10),
iii) mounting the plate (10) onto a mold (20) having a curved surface,
iv) adding at least one weight (14) to the top surface (10a) or to the one of the side surfaces (13) of the structural plate (10), thereby creating linear openings on the outer surface of the plate;
v) keeping the plate (10) under the weight (14) for a sufficient period of time for the plate to adopt the shape of the mold (20) and
vi) filling the grooves (2) with insulation material for hardening the plate (10) and for retaining the curvature of the plate (10).

12. The method according to claim 11 wherein the grooves (2) are of rectilinear shape.

13. The method according to claims 11-12 wherein the depth of the plurality of the grooves (2) is of about 80-95 % of the thickness of the curved structural plate (10).

14. The method according to any of claims 11-13, wherein the insulation material is polyurethane foam.

15. The method according to any of claims 11-14, wherein the insulation material is applied in a liquid state and is configured to expand to fill the plurality of the grooves (2).
